(19) Europäisches Patentamt / European Patent Office / Office européen des brevets

(11) **EP 2 835 521 B1**

(12) **EUROPEAN PATENT SPECIFICATION**

(45) Date of publication and mention
of the grant of the patent:
**29.04.2020 Bulletin 2020/18**

(21) Application number: **12873671.7**

(22) Date of filing: **04.04.2012**

(51) Int Cl.:
*F02G 5/02* *(2006.01)*   *F01K 23/10* *(2006.01)*
*F01N 5/04* *(2006.01)*   *F02C 6/18* *(2006.01)*
*F01K 23/06* *(2006.01)*   *F01K 15/04* *(2006.01)*

(86) International application number:
**PCT/JP2012/059223**

(87) International publication number:
**WO 2013/150620 (10.10.2013 Gazette 2013/41)**

(54) **VESSEL POWER-GENERATION CONTROL DEVICE, VESSEL, AND VESSEL POWER-GENERATION CONTROL METHOD**

VORRICHTUNG ZUR STEUERUNG DER LEISTUNGSERZEUGUNG FÜR EIN SCHIFF, SCHIFF UND VERFAHREN ZUR STEUERUNG DER LEISTUNGSERZEUGUNG FÜR EIN SCHIFF

DISPOSITIF DE CONTRÔLE DE GÉNÉRATION D'ÉLECTRICITÉ D'UN NAVIRE, NAVIRE, ET PROCÉDÉ DE CONTRÔLE DE GÉNÉRATION D'ÉLECTRICITÉ DE NAVIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.02.2015 Bulletin 2015/07**

(73) Proprietor: **Mitsubishi Heavy Industries, Ltd.
Tokyo 108-8215 (JP)**

(72) Inventors:
• **OHTA, Yuji
Tokyo 108-8215 (JP)**

• **KANABOSHI, Takayuki
Tokyo 108-8215 (JP)**

(74) Representative: **Hoffmann Eitle
Patent- und Rechtsanwälte PartmbB
Arabellastraße 30
81925 München (DE)**

(56) References cited:
**WO-A1-2011/040456    WO-A1-2011/065081
JP-A- H05 240 006     JP-A- 2009 097 434
JP-A- 2011 074 866    US-A1- 2010 205 959
US-A1- 2011 203 290   US-A1- 2011 270 451**

**Description**

{Technical Field}

The present invention relates to a power generation control device of a vessel, a vessel, and a power generation control method for a vessel.

{Background Art}

Various engineering developments have been ever made to prevent the shortage of energy supply.

For example, Japanese Unexamined Patent Application, Publication No. 4-131600 describes a technique for supplying energy actually needed by a community at appropriate timing and avoiding the shortage of supply by obtaining a variation from the planned value of the demand for energy that would occurs at the time of a flow of people arriving at the community.

Meanwhile, in a vessel provided with an exhaust heat recovery device that recovers exhaust gas from a main engine and generates electric power, a power management device controls shares of the power load in the vessel to generators such as a generator provided in the exhaust heat recovery system, a diesel generator, and a shaft generator.

With a view to energy saving, for the amount of electric power that cannot be covered by the amount of electric power generated by the exhaust heat recovery device, these shares are determined in accordance with the rated power generation amounts of other generators and the power load in the vessel. At this time, as the power generation amount of the exhaust heat recovery device varies depending on the engine load of the main engine, the engine load is measured, and the shares are then determined in accordance with the measurement result.

In addition, the amount of electric power that can be supplied by the exhaust heat recovery device for handling the engine load is calculated in advance based on design values of the main engine.

US 2011,203290 A1 and WO2011/065081 A1 represent prior art with the pre-characterizing features of claim 1.

{Summary of Invention}

{Technical Problem}

However, the calculated amount of electric power possibly differs from the amount of electric power that can be actually supplied due to calculation errors or the secular change of the main engine.

If the amount of the electric power that can be actually supplied is larger than the calculated amount of electric power, the power generation amount of the exhaust heat recovery device is estimated to be smaller than the actual amount. As a result, the other generators are unnecessarily driven.

On the other hand, if the amount of the electric power that can be actually supplied is smaller than the calculated amount of electric power, the supply of the power from the exhaust heat recovery device is less than the planned supply when the power load in the vessel increases. The other generators are too late for the supply of the power, resulting in the power outage in the vessel. Moreover, if the exhaust heat recovery device supplies the power by an amount closer to the maximum planned value, the other generators need to be put on standby early in case of the increase in the power load in the vessel. The need to put the other generators on standby state is disadvantageously energy-consuming.

The present invention has been made in light of these circumstances, and an object of the present invention is to provide a power generation control device of a vessel, a vessel, and a power generation control method for a vessel capable of more accurately obtaining the amount of electric power generated by an exhaust heat recovery device provided in the vessel.

{Solution to Problem}

This object is solved by a power generation control device with the features of claim 1, a vessel with the features of claim 6 and a power generation control method with the features of claim 7.

A power generation control device in a first aspect of the present invention is a power generation control device of a vessel including an exhaust heat recovery device and a generator, the exhaust heat recovery device recovering exhaust gas energy from an engine and generating electric power using a turbine, and the power generation control device includes: a deriving means for deriving an amount of the electric power generated by the exhaust heat recovery device on the basis of a physical amount of gas at an inlet of the turbine, a physical amount of the gas at an outlet of the turbine, and parameters related to the exhaust heat recovery device; a calculating means for calculating a difference between the amount of the electric power derived by the deriving means and an amount of the electric power needed in the vessel; a first control means for controlling the exhaust heat recovery device on the basis of the amount of the electric power derived by the deriving means; and a second control means for controlling the generator on the basis of the difference calculated by the calculating means.

With the above-described configuration, the power generation control device of the vessel controls the exhaust heat recovery device recovering the exhaust gas energy from the engine and generating the power using the turbine, and the generator.

The deriving means derives the amount of the electric power generated by the exhaust heat recovery device on the basis of the physical amount of the gas at the inlet of the turbine, the physical amount of the gas at the outlet of the turbine, and the parameters related to the exhaust heat recovery device, and the first control means controls the exhaust heat recovery device on the basis of the amount of the electric power derived by the deriving means.

The physical amount of the gas at the inlet of the turbine and the physical amount of the gas at the outlet of the turbine are, for example, the temperature and pressure of the gas at the inlet of the turbine and the temperature and pressure of the gas at the outlet of the turbine, respectively, and are measured values of the physical amounts of the gas supplied to the turbine.

Furthermore, the calculating means calculates the difference between the amount of the electric power derived by the deriving means and the amount of the electric power needed in the vessel, and the second control means controls the generator on the basis of the difference calculated by the calculating means.

In this way, with the configuration described above, the amount of the electric power generated by the exhaust heat recovery device is derived on the basis of the measured value of the physical amount of the gas supplied to the turbine. Therefore, it is possible to more accurately obtain the amount of the electric power generated by the exhaust heat recovery device provided in the vessel.

Furthermore, with the configuration described above, the generator is controlled on the basis of the more accurately derived amount of the electric power generated by the exhaust heat recovery device. Therefore, it is possible to efficiently share the power to the exhaust heat recovery device and the generator.

In the first aspect, it is preferable that the power generation control device includes an adjusting means for adjusting values of the parameters so as to reduce a difference between a derived amount of the electric power derived by the deriving means and an actual amount of the electric power actually generated by the exhaust heat recovery device.

With the above-described configuration, the adjusting means adjusts the values of the parameters related to the exhaust heat recovery device and used to derive the derived amount of the electric power so as to reduce the difference between the derived amount of the electric power that is the amount of the electric power derived by the deriving means and the actual amount of the electric power actually generated by the exhaust heat recovery device.

Therefore, the configuration described above can improve the accuracy of the derived amount of the electric power of the exhaust heat recovery device.

In the first aspect, it is preferable that the deriving means derives the amount of the electric power generated by the exhaust heat recovery device using the model obtained by multiplying the difference between an enthalpy of the gas at an inlet of the exhaust heat recovery device and an enthalpy of the gas at an outlet of the exhaust heat recovery device by a flow rate of the gas supplied to the exhaust heat recovery device and power generation efficiency.

With the configuration described above, it is possible to easily obtain the amount of the electric power generated by the exhaust heat recovery device provided in the vessel using the measured values of the physical amounts of the gas supplied to the turbine.

In the first aspect described above, it is preferable that the gas is exhaust gas emitted from the engine, and that the turbine is a gas turbine.

With the configuration described above, even if the exhaust heat recovery device generates the power using the gas turbine, it is possible to more accurately obtain the amount of the electric power generated by the exhaust heat recovery device provided in the vessel.

In the first aspect, it is preferable that the gas is steam generated by exhaust heat from the engine, and that the turbine is a steam turbine.

With the configuration described above, even if the exhaust heat recovery device generates the power using the steam turbine, it is possible to more accurately obtain the amount of the electric power generated by the exhaust heat recovery device provided in the vessel.

Furthermore, a vessel in a second aspect of the present invention includes a generator; an exhaust heat recovery device for generating electric power by recovering exhaust heat from an engine and supplying the exhaust heat to a turbine; and the power generation control device described above.

With the configuration described above, the generator is controlled on the basis of the more accurate amount of the electric power generated by the exhaust heat recovery device. Therefore, it is possible to efficiently share the power to the exhaust heat recovery device and the generator.

A power generation control method in a third aspect of the present invention is a power generation control method for a vessel including an exhaust heat recovery device and a generator, the exhaust heat recovery device recovering exhaust gas energy from an engine and generating electric power using a turbine, and the power generation control method includes a first step of deriving an amount of the electric power generated by the exhaust heat recovery device on the basis of a physical amount of gas at an inlet of the turbine, a physical amount of the gas at an outlet of the turbine, and parameters related to the exhaust heat recovery device, and controlling the exhaust heat recovery device on the basis of the derived amount of the electric power; and a second step of calculating a difference between the derived amount of the electric power and an amount of the electric power needed in the vessel, and controlling the generator on the basis of the calculated difference.

With the configuration described above, the amount of the electric power generated by the exhaust heat recovery device is derived on the basis of the measured values of the physical amounts of the gas supplied to the turbine. Therefore, it is possible to more accurately obtain the amount of the electric power generated by the exhaust heat recovery device provided in the vessel.

Furthermore, with the configuration described above, the generator is controlled on the basis of the more accurately derived amount of the electric power generated by the exhaust heat recovery device. Therefore, it is possible to efficiently share the power to the exhaust heat recovery device and the generator.

{Advantageous Effects of Invention}

The present invention exhibits an excellent effect that it is possible to more accurately obtain the amount of the electric power generated by the exhaust heat recovery device provided in the vessel.

{Brief Description of Drawings}

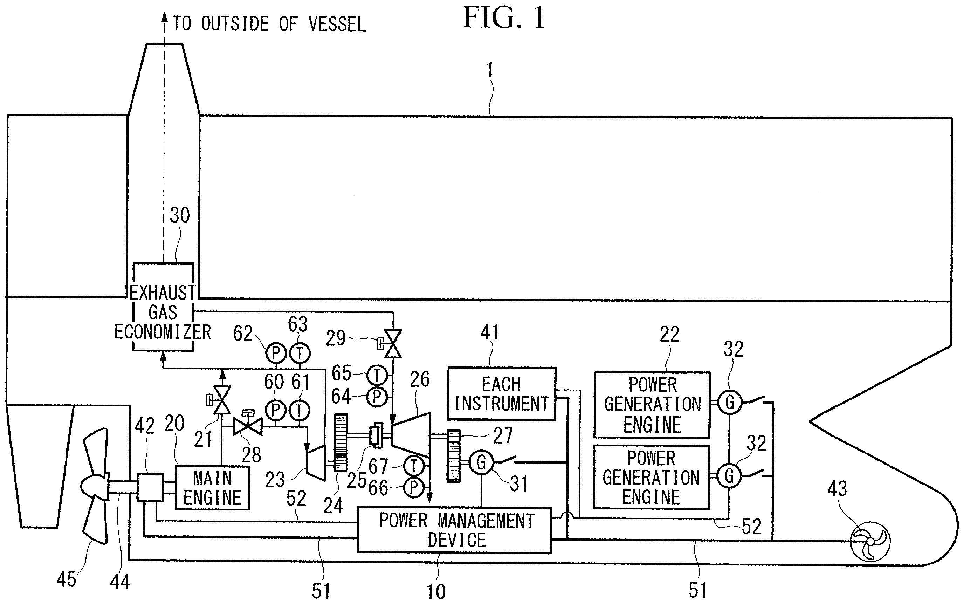

{Fig. 1}
Fig. 1 is a schematic configuration diagram of a vessel according to a first embodiment of the present invention.
{Fig. 2}
Fig. 2 is a block diagram showing a configuration of a power management device according to the first embodiment of the present invention.
{Fig. 3}
Fig. 3 is a block diagram showing a configuration of a power management device according to a second embodiment of the present invention.

{Description of Embodiments}

A power generation control device of a vessel, a vessel, and a power generation control method for a vessel according to embodiments of the present invention will be described hereinafter with reference to the drawings.

First Embodiment

A first embodiment of the present invention will now be described.

As shown in Fig. 1, a vessel 1 includes a power management device 10 that adjusts demand and supply of electric power in the vessel 1, a main engine 20 that propels the vessel 1, a power turbine (gas turbine) 23, a steam turbine 26, a turbine generator (an exhaust heat recovery generator) 31 that is connected to the power turbine 23 and the steam turbine 26, that recovers exhaust heat from the main engine 20, and that generates electric power, and a diesel generator (an internal combustion engine generator) 32 using a power generation engine 22 configured to be independent of the main engine 20. The vessel 1 according to the first embodiment includes two diesel generators 32 by way of example.

The electric power generated by the turbine generator 31 and the diesel generators 32 is supplied to and consumed by instruments 41 such as a ventilator that ventilates the vessel 1, illumination lamps and plug sockets disposed in the vessel 1, and a seawater pump arranged in an engine room of the vessel 1, a shaft generator/motor 42, a thruster 43, and the like via an electric power line 51.

The main engine 20 is controlled to operate by an engine control system (not shown). The power turbine 23, the steam turbine 26, and the turbine generator 31 are controlled to operate by the power management device 10.

For example, the main engine 20 is a low-speed two-stroke diesel engine.

The shaft generator/motor 42 is connected to an output shaft of the main engine 20, and a screw propeller 45 is attached to this shaft generator/motor 42 via a propeller shaft 44.

The shaft generator/motor 42 receives surplus power in the vessel 1 and operates, as a motor, to back up the main engine 20. The shaft generator/motor 42 can also generate electric power by being driven by the main engine 20.

An exhaust port of each of cylinders of the main engine 20 is connected to an exhaust gas economizer 30 through an exhaust manifold, and via an exhaust turbine supercharger, an inlet of the power turbine 23, and a valve 21.

Note that exhaust gas from the power turbine 23 is also introduced into the exhaust gas economizer 30.

In a heat exchange unit of the exhaust gas economizer 30, the heat of the introduced exhaust gas heats and evaporates water supplied from a feed pipe to generate superheated steam. The superheated steam generated in the heat exchange unit is introduced, as main steam, to the steam turbine 26, and the steam leaving this steam turbine 26 after doing work is introduced to a condenser, where the steam is returned to water (not shown). The water returned by the condenser cools wall portions of an air-cooled condenser and the main engine 20 and is heated, and the heated water is then supplied again to the exhaust gas economizer 30.

The power turbine 23 is driven to rotate by the exhaust gas bled from the exhaust manifold of the main engine 20. The steam turbine 26 is driven to rotate by supplying the steam generated by the exhaust gas economizer 30 to the steam turbine 26.

The power turbine 23 and the steam turbine 26, which are coupled in series, drive the turbine generator 31. An output shaft of the steam turbine 26 is connected to the turbine generator 31 via a speed reducer 27 and a coupling. An output shaft of the power turbine 23 is coupled to an input shaft of the steam turbine 26 via a speed reducer 24 and a clutch 25.

A power-turbine control valve (exhaust-gas-amount regulating valve) 28 that controls an amount of the gas introduced into the power turbine 23 is provided upstream in an exhaust gas flow direction of the power turbine 23. A steam-turbine control valve (steam-amount regulating valve) 29 that controls an amount of the steam introduced into the steam turbine 26 is provided upstream in a steam flow direction of the steam turbine 26.

The power management device 10 controls openings of the power-turbine control valve 28 and the steam-turbine control valve 29.

In this way, the exhaust gas energy of the exhaust gas (combustion gas) from the main engine 20 is recovered as power and used to drive the turbine generator 31.

That is, in the vessel 1 according to the first embodiment, the power turbine 23, the steam turbine 26, and the turbine generator 31 constitute an exhaust heat recovery device that recovers the exhaust gas energy from the main engine 20 and that generates the power.

The power management device 10 is arranged in an engine control room of the vessel 1, and electrically connected to the turbine generator 31 (exhaust heat recovery device), the diesel generators 32, the instruments 41 in the vessel 1, the shaft generator/motor 42, and the thruster 43 by an electric power line 52.

The power management device 10 thereby controls power generation amounts of the diesel generators 32 and the shaft generator/motor 42 on the basis of the demand power demanded by the instruments 41 in the vessel 1, the shaft generator/motor 42, the thruster 43, and the like and of the power generation amount generated by the exhaust heat recovery device.

In the first embodiment, the vessel 1 includes an inlet-gas pressure sensor 60 measuring an inlet gas pressure of the power turbine 23, an inlet-gas temperature sensor 61 measuring an inlet gas temperature of the power turbine 23, an outlet-gas pressure sensor 62 measuring an outlet gas pressure of the power turbine 23, and an outlet-gas temperature sensor 63 measuring an outlet gas temperature of the power turbine 23. The vessel 1 also includes an inlet-steam pressure sensor 64 measuring an inlet steam pressure of the steam turbine 26, an inlet-steam temperature sensor 65 measuring an inlet steam temperature of the steam turbine 26, an outlet-steam pressure sensor 66 measuring an outlet steam pressure of the steam turbine 26, and an outlet-steam temperature sensor 67 measuring an outlet steam temperature of the steam turbine 26.

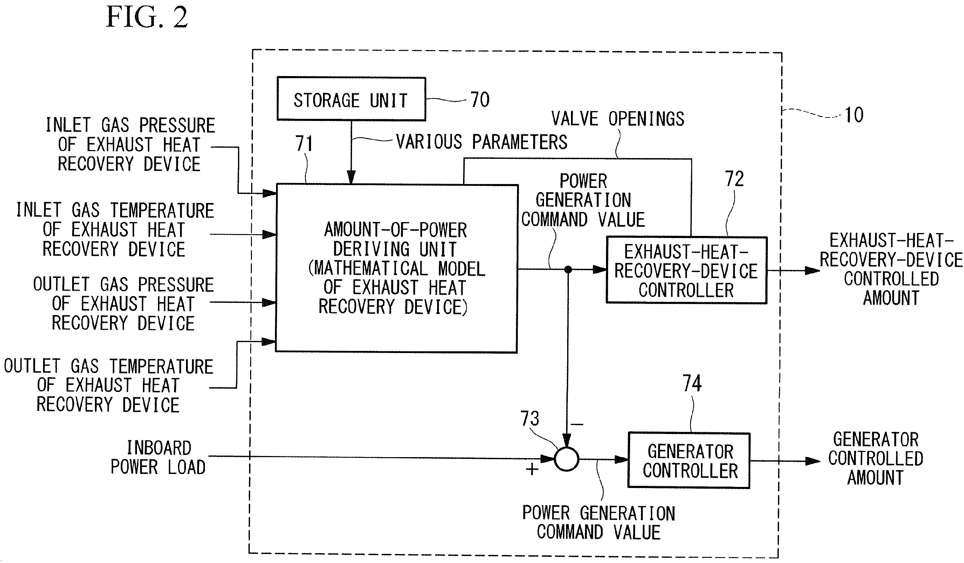

Fig. 2 is a block diagram showing a configuration of the power management device 10 according to the first embodiment.

The power management device 10 includes a storage unit 70, an amount-of-power deriving unit 71, an exhaust-heat-recovery-device controller 72, a subtracter 73, and a generator controller 74.

The storage unit 70, which is configured by a magnetic storage device or a semiconductor storage device, stores various data. The storage unit 70 stores various parameters related to the exhaust heat recovery device. The various parameters refer to design values and the like of the exhaust heat recovery device. Specifically, the various parameters include the design values such as the composition of the exhaust gas emitted from the main engine 20, characteristics of the power-turbine control valve 28, characteristics of the steam-turbine control valve 29, and power generation efficiency of the exhaust heat recovery device.

The amount-of-power deriving unit 71 sequentially derives the amount of electric power generated by the exhaust heat recovery device on the basis of physical amounts of gases (the exhaust gas and the steam in the first embodiment) at inlets of the exhaust heat recovery device, physical amounts of the gases at outlets of the exhaust heat recovery device, and the parameters related to the exhaust gas recovery device.

In the first embodiment, the physical amounts of the gases at the inlets of the exhaust heat recovery device are the inlet gas pressure of the power turbine 23 measured by the inlet-gas pressure sensor 60, the inlet gas temperature of the power turbine 23 measured by the inlet-gas temperature sensor 61, the inlet steam pressure of the steam turbine 26 measured by the inlet-steam pressure sensor 64, and the inlet steam temperature of the steam turbine 26 measured by the inlet-steam temperature sensor 65.

Furthermore, in the first embodiment, the physical amounts of the gases at the outlets of the exhaust heat recovery device are the outlet gas pressure of the power turbine 23 measured by the outlet-gas pressure sensor 62, the outlet gas temperature of the power turbine 23 measured by the outlet-gas temperature sensor 63, the outlet steam pressure of the steam turbine 26 measured by the outlet-steam pressure sensor 66, and the outlet steam temperature of the steam turbine 26 measured by the outlet-steam temperature sensor 67.

In this way, measured values of the physical amounts of the gases supplied to the power turbine 23 and the steam turbine 26 that constitute the exhaust heat recovery device are input to the amount-of-power deriving unit 71.

Moreover, valve openings output from the exhaust-heat-recovery-device controller 72 are input to the amount-of-power deriving unit 71. The valve openings are the openings of the power-turbine control valve 28 and the steam-turbine control valve 29.

Furthermore, the amount-of-power deriving unit 71 can read the various parameters stored in the storage unit 70.

The amount of the electric power derived by the amount-of-power deriving unit 71 (hereinafter, "derived amount of the electric power") is output to the exhaust-heat-recovery-device controller 72 as a power generation command value to the exhaust heat recovery device.

The exhaust-heat-recovery-device controller 72 computes exhaust-heat-recovery-device controlled amount that are controlled amount (for example, the openings of the power-turbine control valve 28 and the steam-turbine control valve 29) for the power turbine 23 and the steam turbine 26 that constitute the exhaust heat recovery device, and outputs the exhaust-heat-recovery-device controlled amount to the exhaust heat recovery device (the power turbine 23 and the steam turbine 26), thereby controlling the exhaust heat recovery device.

The subtracter 73 calculates a difference between the derived amount of the electric power derived by the amount-of-power deriving unit 71 and the amount of power (corresponding to the demand power described above, hereinafter, "inboard power load") necessary within the vessel 1, and outputs the calculated difference to the generator controller 74 as a power generation command value to the diesel generators 32 and the shaft generator/motor 42.

The generator controller 74 computes generator controlled amount that is the amount controlled for the diesel generators 32 and the shaft generator/motor 42 on the basis of the input power generation command value, outputs the generator controlled amount to the diesel generators 32 and the shaft generator/motor 42, thereby controlling the diesel generators 32 and the shaft generator/motor 42.

Specifically, if the power generation command value output from the subtracter 73 is 0 (zero), the amount of the electric power generated by the exhaust heat recovery device is equal to the inboard power load. Therefore, the generator controller 74 does not need to newly generate power, and does not control the diesel generators 32 and the shaft generator/motor 42.

If the power generation command value output from the subtracter 73 is smaller than 0 (zero), the amount of the electric power generated by the exhaust heat recovery device insufficiently meets the inboard power load. Therefore, the generator controller 74 needs to newly generate power, and controls at least one of the diesel generators 32 and the shaft generator/motor 42 to generate the power. Whether to drive the diesel generators 32 or the shaft generator/motor 42 may be determined in advance in accordance with rated power generation amounts of the diesel generators 32 and the shaft generator/motor 42 and the power generation controlled amount thereof.

If the power generation command value output from the subtracter 73 exceeds 0 (zero), the amount of the electric power generated by the exhaust heat recovery device contains surplus power beyond the inboard power load. Therefore, the generator controller 74 may supply the surplus power to the shaft generator/motor 42 to control the shaft generator/motor 42 to operate, as a motor, to back up the main engine 20, or charge an electrical storage device provided in the vessel 1 with the surplus power.

A method of deriving the amount of the electric power executed by the amount-of-power deriving unit 71 will be described in detail.

The amount-of-power deriving unit 71 according to the first embodiment calculates the derived amount of the electric power using a mathematical model of the exhaust heat recovery device.

Providing that the derived amount of the electric power is P, the enthalpy of the gas at the inlet of the exhaust heat recovery device is He, the enthalpy of the gas at the outlet of the exhaust heat recovery device is Ho, the flow rate of the gas supplied to the exhaust heat recovery device is Q, the power generation efficiency is $\eta$, and turbine no-load loss is $P_{LOSS}$, the mathematical model of the exhaust heat recovery device is represented by the following Equation (1).

$$P = \{(He - Ho) \times Q - P_{LOSS}\} \times \eta \quad \cdots (1)$$

In the first embodiment, the derived amount of the electric power P is obtained by adding up an amount of electric power (derived amount of electric power Pp) generated by using the power turbine 23 and an amount of electric power (derived amount of electric power Ps) generated by using the steam turbine 26.

The enthalpy Hep of the exhaust gas at the inlet of the power turbine 23 is obtained using the values such as the composition of the exhaust gas stored in the storage unit 70 as the parameters and the inlet gas pressure and inlet gas temperature input to the amount-of-power deriving unit 71.

The enthalpy Hop of the exhaust gas at the outlet of the power turbine 23 is obtained using the values such as the composition of the exhaust gas stored in the storage unit 70 as the parameters and the outlet gas pressure and outlet gas temperature input to the amount-of-power deriving unit 71.

The enthalpies Hep and Hop may be obtained by assigning various values to a predetermined equation or obtained from a table stored in the storage unit 70 that shows the relation between the enthalpies according to the compositions of the exhaust gas and the pressure or temperature.

Similarly to the enthalpies Hep and Hop, an enthalpy Hes of the steam at the inlet of the steam turbine 26 and an enthalpy Hos of the steam at the outlet of the steam turbine 26 can be obtained using the values such as the inlet steam pressure, the inlet steam temperature, the outlet steam pressure, and the outlet steam temperature input to the amount-of-power deriving unit 71.

A flow rate Qp of the exhaust gas is obtained from the characteristics of the power-turbine control valve 28, the inlet gas pressure, and the valve opening of the power-turbine control valve 28 stored in the storage unit 70. A flow rate Qs of the steam is obtained from the characteristics of the steam-turbine control valve 29, the inlet steam pressure, and the opening of the steam-turbine control valve 29 stored in the storage unit 70.

A no-load loss $Pp_{LOSS}$ of the power turbine 23 and a no-load loss $Ps_{LOSS}$ of the steam turbine 26 are derived as the design values and stored in the storage unit 70 as parameters.

The power generation efficiency ηp of the power turbine 23 and the power generation efficiency ηs of the steam turbine 26 are stored in the storage unit 70 as parameters.

From the aforementioned, the derived amount of the electric power Pp of the power turbine 23 is represented by the following Equation (2) and the derived amount of the electric power Ps of the steam turbine 26 is represented by the following Equation (3).

$$ Pp = \left\{ (Hep - Hop) \times Qp - Pp_{LOSS} \right\} \times \eta p \quad \cdots (2) $$

$$ Ps = \left\{ (Hes - Hos) \times Qs - Ps_{LOSS} \right\} \times \eta s \quad \cdots (3) $$

The amount-of-power deriving unit 71 derives the amount of the electric power of the exhaust heat recovery device by adding up the amounts of the power Pp and Ps, and outputs the derived amount of the electric power as the power generation command value to the exhaust heat recovery device.

As described so far, the power management device 10 according to the first embodiment derives the amount of the electric power generated by the exhaust heat recovery device on the basis of the physical amounts of the gases at the inlets of the power turbine 23 and the steam turbine 26, the physical amounts of the gases at the outlets of the power turbine 23 and the steam turbine 26, and the parameters related to the exhaust heat recovery device, and controls the exhaust heat recovery device on the basis of the derived amount of the electric power. The power management device 10 then calculates the difference between the derived amount of the electric power and the inboard power load, and controls the diesel generators 32 and the shaft generator/motor 42 on the basis of the calculated difference.

Therefore, the power management device 10 according to the first embodiment can obtain the amount of the electric power generated by the exhaust heat recovery device provided in the vessel 1 more accurately. The power management device 10 also controls the diesel generators 32 and the shaft generator/motor 42 on the basis of the more accurately derived amount of the electric power of the exhaust heat recovery device. Therefore, it is possible to highly efficiently share the power to the exhaust heat recovery device, the diesel generators 32, and the shaft generator/motor 42.

Second Embodiment

A second embodiment of the present invention will next be described.

Since the vessel 1 according to the second embodiment is similar in configuration to the vessel 1 according to the first embodiment, the configuration of the vessel 1 is not repeatedly described herein.

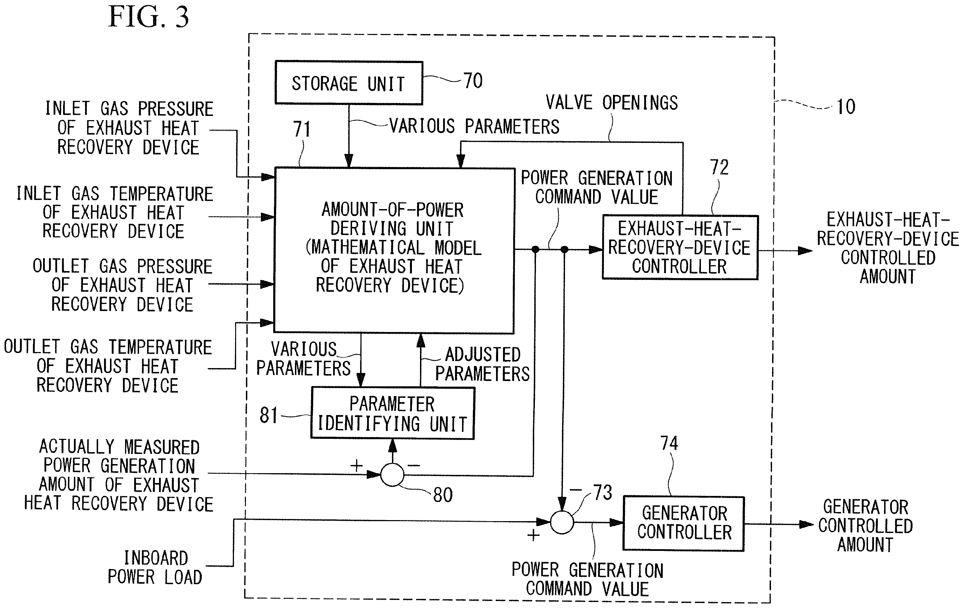

Fig. 3 shows a configuration of the power management device 10 according to the second embodiment. Constituent elements shown in Fig. 3 and identical to those shown in Fig. 2 are denoted by the same reference numerals and will not be described herein.

The power management device 10 according to the second embodiment includes a subtracter 80 and parameters identifying unit 81.

A value of the amount of the electric power actually generated by the exhaust heat recovery device (hereinafter, "actual amount of the electric power") is input to the power management device 10 according to the second embodiment.

The subtracter 80 calculates a difference between the actual power generation amount and the derived amount of the electric power (power generation command value) output from the amount-of-power deriving unit 71, and outputs the difference to the parameter identifying unit 81.

The parameter identifying unit 81 adjusts values of the parameters related to the exhaust heat recovery device and used to derive the derived amount of the electric power so as to reduce the difference between the derived amount of the electric power and the actual amount of the electric power, and identifies the values of parameters at which the derived amount of the electric power matches the actual amount of the electric power. The parameter identifying unit 81 then outputs the value-adjusted parameters to the amount-of-power deriving unit 71.

When the values of the value-adjusted parameters are input to the amount-of-power deriving unit 71, the amount-of-power deriving unit 71 uses the values of the value-adjusted parameters for subsequently deriving the amount of the electric power generated by the exhaust heat recovery device.

It is assumed that the parameter identifying unit 81 adjusts the values of the parameters if the difference between the derived amount of the electric power and the actual amount of the electric power is equal to or greater than a predetermined magnitude (for example, the difference is equal to or greater than five %).

In the second embodiment, as an example of the adjusted parameters, values of the power generation efficiency $\eta p$ of the power turbine 23 and the power generation efficiency $\eta s$ of the steam turbine 26 are adjusted for the following reasons. The power generation efficiencies $\eta p$ and $\eta s$ are decreased with a temporal change of the exhaust heat recovery device, presumably resulting in the generation of the difference between the derived amount of the electric power and the actual amount of the electric power.

If the difference between the derived amount of the electric power and the actual amount of the electric power is equal to or greater than the predetermined magnitude, the parameter identifying unit 81 adjusts the power generation efficiencies $\eta p$ and $\eta s$ so as to be made lower, and outputs the values of the adjusted power generation efficiencies $\eta p$ and $\eta s$ to the amount-of-power deriving unit 71.

The adjusted amounts of the parameters are determined in advance in accordance with the difference between the derived amount of the electric power and the actual amount of the electric power, for example, determined experimentally, empirically or by simulation.

As described so far, the power management device 10 according to the second embodiment adjusts the values of the parameters related to the exhaust heat recovery device and used to derive the derived amount of the electric power so as to reduce the difference between the derived amount of the electric power and the actual amount of the electric power of the exhaust heat recovery device, and derives the amount of the electric power of the exhaust heat recovery device using the adjusted parameters.

Therefore, the power management device 10 can improve the accuracy of the derived amount of the electric power of the exhaust heat recovery device.

While the present invention has been described so far with reference to the embodiments, the technical scope of the present invention is not limited to that described in the embodiments. Various changes or improvements can be made to the embodiments without departing from the scope of the present invention, and such changes or improvements fall within the technological scope of the present invention.

For example, in the embodiments, the exhaust heat recovery device has been described as being configured to use the power turbine 23 and the steam turbine 26. However, the present invention is not limited to this configuration and the exhaust heat recovery device may be configured to use only one of the power turbine 23 and the steam turbine 26.

Alternatively, the exhaust heat recovery device may be configured to use a hybrid supercharger that generates electric power using the turbine power of the exhaust turbine supercharger mounted in the main engine 20. With the configuration to use the hybrid supercharger as the exhaust heat recovery device, the amount of the generated power is derived on the basis of the physical amount of the exhaust gas at an inlet of the exhaust turbine supercharger, the physical amount of the exhaust gas at an outlet of the exhaust turbine supercharger, and parameters related to the hybrid supercharger.

Moreover, the mathematical model of the exhaust heat recovery device described above is given only for illustrating purposes and a model excluding the turbine no-load loss $P_{LOSS}$ may be adopted.

Furthermore, the mathematical model of the exhaust heat recovery device described above may be replaced by a mathematical model using other parameters such as a turbine moment (turbine inertial force) besides the aforementioned parameters as the parameters used to derive the amount of the electric power of the exhaust heat recovery device with a view of improving the accuracy of the derived amount of the electric power of the exhaust heat recovery device. For example, the number of revolutions $\omega$ of the turbine may be measured and the power generation amount may be obtained from motion equations expressed by Equations (4) and (5).

$$I\frac{d\omega}{dt} = \frac{gP_{ST}}{\omega} - T_{LOSS} \quad \cdots(4)$$

$$P = (P_{ST} \times 8.4324142 - P_{LOSS}) \times \eta \quad \cdots(5)$$

$P_{ST}$: steam turbine power (kgf·m/s)
$\eta$: power generation efficiency (-)
I: inertial moment (kg·m2)
g: gravitational acceleration=9.8 (m/s2)
$T_{ST}$: steam turbine torque (kgf·m)
$\omega$: steam turbine angular velocity (rad/s)
$T_{LOSS}$: load torque (N·m)
P: turbine power generation amount (kcal/h)
$P_{LOSS}$: turbine no-load torque (kcal/h)
1 (kgf·m/s)=8.4324142 (kcal/h)

{Reference Signs List}

1 vessel
10 power management device
20 main engine
23 power turbine
26 steam turbine
71 amount-of-power deriving unit
72 exhaust-heat-recovery-device controller
73 subtracter
74 generator controller
81 parameter identifying unit

**Claims**

1. A power generation control device of a vessel (1) including an exhaust heat recovery device (23, 26, 31) and a generator (32), the exhaust heat recovery device recovering exhaust gas energy from an engine (20) and generating electric power using a turbine (23, 26), the power generation control device,
   **characterized in that**
   the power generation control device comprises:

   a deriving means (71) for deriving an amount of the electric power generated by the exhaust heat recovery device on the basis of a physical amount of gas at an inlet of the turbine (23, 26), a physical amount of the gas at an outlet of the turbine (23, 26), and parameters related to the exhaust heat recovery device;
   a calculating means (73) for calculating a difference between the amount of the electric power derived by the deriving means (71) and an amount of the electric power needed in the vessel (1) ;
   a first control means (72) for controlling the exhaust heat recovery device on the basis of the amount of the electric power derived by the deriving means (71); and
   a second control means (74) for controlling the generator (32) on the basis of the difference calculated by the calculating means (73).

2. The power generation control device of a vessel (1) according to claim 1, comprising an adjusting means (10) for adjusting values of the parameters so as to reduce a difference between a derived amount of the electric power derived by the deriving means (71) and an actual amount of the electric power actually generated by the exhaust heat recovery device (23, 26, 31) .

3. The power generation control device of a vessel (1) according to claim 1 or 2, wherein the deriving means (71) derives the amount of the electric power generated by the exhaust heat recovery device (23, 26, 31) using a model obtained by multiplying a difference between an enthalpy of the gas at an inlet of the exhaust heat recovery device (23, 26, 31) and an enthalpy of the gas at an outlet of the exhaust heat recovery device (23, 26, 31) by a flow rate of the gas supplied to the exhaust heat recovery device and power generation efficiency.

4. The power generation control device of a vessel according to any one of claims 1 to 3, wherein
   the gas is exhaust gas emitted from the engine (20), and
   the turbine is a gas turbine (23).

5. The power generation control device of a vessel (1) according to any one of claims 1 to 3, wherein
   the gas is steam generated by exhaust heat from the engine (20), and
   the turbine is a steam turbine (26).

6. A vessel comprising:

   the power generation control device according to any one of claims 1 to 5
   the generator; and
   the exhaust heat recovery device (23, 26, 31) for generating electric power by recovering exhaust heat from an engine (20) and supplying the exhaust heat to a turbine (23).

7. A power generation control method for a vessel (1) including an exhaust heat recovery device and a generator, the exhaust heat recovery device (23, 26, 31) recovering exhaust gas energy from an engine (20) and generating electric power using a turbine (23, 26), the power generation control method comprising:

   a first step of deriving an amount of the electric power generated by the exhaust heat recovery device on the basis of a physical amount of gas at an inlet of the turbine (23, 26), a physical amount of the gas at an outlet of the turbine (23, 26), and parameters related to the exhaust heat recovery device, and controlling the exhaust heat recovery device on the basis of the derived amount of the electric power; and
   a second step of calculating a difference between the derived amount of the electric power and an amount of the electric power needed in the vessel (1), and controlling the generator (32) on the basis of the calculated difference.

**Patentansprüche**

1. Stromerzeugungssteuervorrichtung für ein Wasserfahrzeug (1) einschließlich einer Abwärmerückgewinnungsvorrichtung (23, 26, 31) und eines Generators (32), wobei die Abwärmerückgewinnungsvorrichtung Abgasenergie von einem Motor (20) zurückgewinnt und elektrische Leistung unter Verwendung einer Turbine (23, 26) erzeugt, wobei die Stromerzeugungssteuervorrichtung,
   **dadurch gekennzeichnet ist, dass**
   die Stromerzeugungssteuervorrichtung umfasst:

   ein Ableitungsmittel (71) zum Ableiten einer Menge von elektrischer Leistung, die von der Abwärmerückgewinnungsvorrichtung erzeugt wird, basierend auf einer physikalischen Gasmenge an einem Einlass der Turbine (23, 26), einer physikalischen Gasmenge an einem Auslass der Turbine (23, 26) und Parametern in Bezug auf die Abwärmerückgewinnungsvorrichtung;
   ein Berechnungsmittel (73) zum Berechnen einer Differenz zwischen der Menge der durch das Ableitungsmittel (71) abgeleiteten elektrischen Leistung und einer Menge der in dem Wasserfahrzeug (1) benötigten elektrischen Leistung;
   ein erstes Steuermittel (72) zum Steuern der Abwärmerückgewinnungsvorrichtung basierend auf der Menge der elektrischen Leistung, die von dem Ableitungsmittel (71) abgeleitet wird; und
   ein zweites Steuermittel (74) zum Steuern des Generators (32) basierend auf der Differenz, die durch das Berechnungsmittel (73) berechnet wird.

**2.** Energieerzeugungssteuervorrichtung eines Wasserfahrzeugs (1) nach Anspruch 1, umfassend ein Einstellmittel (10) zum Einstellen von Parameterwerten, um eine Differenz zwischen einer abgeleiteten Menge der durch das Ableitungsmittel (71) abgeleiteten elektrischen Leistung und einer tatsächlichen Menge der von der Abwärmerückgewinnungsvorrichtung (23, 26, 31) tatsächlich erzeugten elektrischen Leistung zu verringern.

**3.** Energieerzeugungssteuervorrichtung eines Wasserfahrzeugs (1) nach Anspruch 1 oder 2, wobei das Ableitungsmittel (71) die Menge der von der Abwärmerückgewinnungsvorrichtung (23, 26, 31) erzeugten elektrischen Leistung unter Verwendung eines erhaltenen Modells, das durch Multiplizieren einer Differenz zwischen einer Enthalpie des Gases an einem Einlass der Abwärmerückgewinnungsvorrichtung (23, 26, 31) und einer Enthalpie des Gases an einem Auslass der Abwärmerückgewinnungsvorrichtung (23, 26, 31) mit einer Durchflussrate von Gas, das der Abwärmerückgewinnungsvorrichtung zugeführt wird, und dem Wirkungsgrad der Stromerzeugung erhalten wird.

**4.** Stromerzeugungssteuervorrichtung eines Wasserfahrzeugs nach einem der Ansprüche 1 bis 3, wobei
das Gas Abgas ist, das von dem Motor (20) emittiert wird, und
die Turbine eine Gasturbine (23) ist.

**5.** Stromerzeugungssteuervorrichtung eines Wasserfahrzeugs (1) nach einem der Ansprüche 1 bis 3, wobei
das Gas Dampf ist, der durch Abwärme vom Motor (20) erzeugt wird, und
die Turbine eine Dampfturbine (26) ist.

**6.** Wasserfahrzeug, umfassend:

die Stromerzeugungssteuervorrichtung nach einem der Ansprüche 1 bis 5 den Generator; und
die Abwärmerückgewinnungsvorrichtung (23, 26, 31) zum Erzeugen elektrischer Leistung durch Rückgewinnung von Abwärme von einem Motor (20) und Zuführen der Abwärme zu einer Turbine (23).

**7.** Stromerzeugungssteuerverfahren für ein Wasserfahrzeug (1) einschließlich einer Abwärmerückgewinnungsvorrichtung und eines Generators, wobei die Abwärmerückgewinnungsvorrichtung (23, 26, 31) Abgasenergie von einem Motor (20) zurückgewinnt und elektrische Leistung unter Verwendung einer Turbine (23, 26) erzeugt, wobei das Stromerzeugungssteuerverfahren umfasst:

einen ersten Schritt des Ableitens einer Menge von elektrischer Leistung, die von der Abwärmerückgewinnungsvorrichtung erzeugt wird, basierend auf einer physikalischen Gasmenge an einem Einlass der Turbine (23, 26), einer physikalischen Gasmenge an einem Auslass der Turbine (23, 26) und Parametern in Bezug auf die Abwärmerückgewinnungsvorrichtung und des Steuerns der Abwärmerückgewinnungsvorrichtung basierend auf der abgeleiteten Menge der elektrischen Leistung; und
einen zweiten Schritt des Berechnens einer Differenz zwischen der abgeleiteten Menge an elektrischer Leistung und einer Menge an in dem Wasserfahrzeug (1) benötigten elektrischen Leistung und des Steuerns des Generators (32) basierend auf der berechneten Differenz.

**Revendications**

**1.** Dispositif de commande de génération de puissance d'un vaisseau (1) incluant un dispositif de récupération de chaleur d'échappement (23, 26, 31) et un générateur (32), le dispositif de récupération de chaleur d'échappement récupérant une énergie de gaz d'échappement provenant d'un moteur (20) et générant une puissance électrique à l'aide d'une turbine (23, 26), le dispositif de commande de génération de puissance
étant **caractérisé en ce que**
le dispositif de commande de génération de puissance comprend :

un moyen de dérivation (71) pour dériver une quantité de la puissance électrique générée par le dispositif de récupération de chaleur d'échappement sur la base d'une quantité physique de gaz au niveau d'une entrée de la turbine (23, 26), d'une quantité physique du gaz au niveau d'une sortie de la turbine (23, 26), et de paramètres liés au dispositif de récupération de chaleur d'échappement ;
un moyen de calcul (73) pour calculer une différence entre la quantité de la puissance électrique dérivée par le moyen de dérivation (71) et une quantité de la puissance électrique nécessaire dans le vaisseau (1) ;
un premier moyen de commande (72) pour commander le dispositif de récupération de chaleur d'échappement sur la base de la quantité de la puissance électrique dérivée par le moyen de dérivation (71) ; et

un second moyen de commande (74) pour commander le générateur (32) sur la base de la différence calculée par le moyen de calcul (73).

2. Dispositif de commande de génération de puissance d'un vaisseau (1) selon la revendication 1, comprenant un moyen d'ajustement (10) pour ajuster des valeurs des paramètres de façon à réduire une différence entre une quantité dérivée de la puissance électrique dérivée par le moyen de dérivation (71) et une quantité réelle de la puissance électrique générée réellement par le dispositif de récupération de chaleur d'échappement (23, 26, 31).

3. Dispositif de commande de génération de puissance d'un vaisseau (1) selon la revendication 1 ou 2, dans lequel le moyen de dérivation (71) dérive la quantité de la puissance électrique générée par le dispositif de récupération de chaleur d'échappement (23, 26, 31) à l'aide d'un modèle obtenu en multipliant une différence entre une enthalpie du gaz au niveau d'une entrée du dispositif de récupération de chaleur d'échappement (23, 26, 31) et une enthalpie du gaz au niveau d'une sortie du dispositif de récupération de chaleur d'échappement (23, 26, 31) par un débit du gaz fourni au dispositif de récupération de chaleur d'échappement et un rendement de génération de puissance.

4. Dispositif de commande de génération de puissance d'un vaisseau selon l'une quelconque des revendications 1 à 3, dans lequel
le gaz est un gaz d'échappement émis par le moteur (20), et
la turbine est une turbine à gaz (23).

5. Dispositif de commande de génération de puissance d'un vaisseau (1) selon l'une quelconque des revendications 1 à 3, dans lequel
le gaz est de la vapeur générée par de la chaleur d'échappement provenant du moteur (20), et
la turbine est une turbine à vapeur (26).

6. Vaisseau comprenant :

le dispositif de commande de génération de puissance selon l'une quelconque des revendications 1 à 5
le générateur ; et
le dispositif de récupération de chaleur d'échappement (23, 26, 31) pour générer une puissance électrique en récupérant de la chaleur d'échappement provenant d'un moteur (20) et en fournissant la chaleur d'échappement à une turbine (23).

7. Procédé de commande de génération de puissance pour un vaisseau (1) incluant un dispositif de récupération de chaleur d'échappement et un générateur, le dispositif de récupération de chaleur d'échappement (23, 26, 31) récupérant une énergie de gaz d'échappement provenant d'un moteur (20) et générant une puissance électrique à l'aide d'une turbine (23, 26), le procédé de commande de génération de puissance comprenant :

une première étape de dérivation d'une quantité de la puissance électrique générée par le dispositif de récupération de chaleur d'échappement sur la base d'une quantité physique de gaz au niveau d'une entrée de la turbine (23, 26), d'une quantité physique du gaz au niveau d'une sortie de la turbine (23, 26), et de paramètres liés au dispositif de récupération de chaleur d'échappement, et de commande du dispositif de récupération de chaleur d'échappement sur la base de la quantité dérivée de la puissance électrique ; et
une seconde étape de calcul d'une différence entre la quantité dérivée de la puissance électrique et une quantité de la puissance électrique nécessaire dans le vaisseau (1), et de commande du générateur (32) sur la base de la différence calculée.

FIG. 1

FIG. 2

EP 2 835 521 B1

# FIG. 3

**EP 2 835 521 B1**

**Patent documents cited in the description**

- JP 4131600 A
- US 2011203290 A1
- WO 2011065081 A1